# EUROPÄISCHE PATENTSCHRIFT

(11) **EP 0 636 513 B1**
(45) Veröffentlichungstag und Bekanntmachung des Hinweises auf die Patenterteilung: **29.07.1998**
(21) Anmeldenummer: 94107815.6
(22) Anmeldetag: 20.05.1994
(51) Int. Cl.: B60N 2/48

(54) **Klappvorrichtung für eine Kfz-Kopfstütze**
Folding apparatus for a car head rest
Dispositif de repliage d'un appui-tête pour voitures

(30) Priorität: 28.07.1993 DE 4325244
(43) Veröffentlichungstag der Anmeldung: 01.02.1995
(73) Patentinhaber: FRIEDR. FINGSCHEIDT GmbH, D-42551 Velbert (DE)
(72) Erfinder: Linnenbrink, Jörg, D-42327 Wuppertal (DE)
(74) Vertreter: Zapf, Christoph, Dipl.-Ing.

(56) Entgegenhaltungen:
- EP-A- 0 065 644
- EP-A- 0 447 150
- EP-A- 0 450 166
- DE-A- 3 332 728
- DE-A- 3 600 411
- DE-A- 3 623 658
- DE-A- 3 912 403
- FR-A- 2 401 040

## Beschreibung

Die vorliegende Erfindung betrifft eine Klappvorrichtung für eine Kfz-Kopfstütze, mit einem in einem Fahrzeug befestigbaren Lagerteil und einem an dem Lagerteil um eine Schwenkachse schwenkbar gelagerten Kopfstützen-Halteteil, wobei das schwenkbar gelagerte Kopfstützen-Halteteil zwei zur Schwenkachse senkrechte und zueinander parallele Aufnahmeöffnungen zur Aufnahme der Enden von zwei Trägerstangen der Kopfstütze aufweist, und wobei das Halteteil zum Zurückklappen der Kopfstütze in eine Nichtgebrauchsstellung durch Federkraft in eine Rückklappstellung sowie zum Hochklappen der Kopfstütze in eine Gebrauchsstellung gegen die Federkraft in eine Hochklappstellung verschwenkbar ist und in der Hochklappstellung über ein Fallenschloß verriegelt sowie zur Freigabe der federkraftbedingten Schwenkbewegung in die Rückklappstellung über einen Lösemechanismus entriegelbar ist, wobei das Halteteil zweiteilig aus zwei Aufnahmeteilen gebildet ist und jedes Aufnahmeteil einen Schwenklagerabschnitt mit einer zur Schwenkachse koaxialen Lageröffnung sowie einen Aufnahmeabschnitt mit einer der Aufnahmeöffnungen für eine der beiden Trägerstangen der Kopfstütze aufweist, und wobei die beiden Aufnahmeteile über eine zur Schwenkachse parallele, mit dem Fallenschloß zusammenwirkende Verriegelungsstange verbunden sind.

Eine derartige Klappvorrichtung ist aus der DE-C-33 32 728 bekannt. Sie dient dazu, eine im Bereich des Fahrzeugfonds, d.h. an den Rücksitzen eines Fahrzeuges, angeordnete Kopfstütze aus einer hochgeklappten, verriegelten Gebrauchsstellung nach hinten und unten in eine im Bereich der Hutablage gebildete Aufnahmemulde zurück (Nichtgebrauchsstellung) sowie umgekehrt wieder in die Gebrauchsstellung klappen zu können. Dabei erfolgt - ausgehend von der verriegelten Hochklapp- bzw. Gebrauchsstellung - ein Entriegeln über ein pneumatisches Betätigungsorgan, eine sogenannte "Unterdruckdose", wodurch das Kopfstützen-Halteteil freigegeben und durch die Federkraft zurückgeklappt wird. Ein Hochklappen bis in die wieder verriegelte Gebrauchsstellung erfolgt dann manuell; es kann hierzu jedoch auch eine Antriebseinrichtung vorgesehen sein, wie sie beispielsweise in der DE-C-36 00 411 beschrieben ist.

Aus der DE-C-36 23 658 ist ebenfalls eine gattungsgemäße Klappvorrichtung bekannt, die darüber hinaus mit einer die federkraftbedingte Rückklappbewegung bremsenden Dämpfungsvorrichtung ausgestattet ist. Diese Dämpfungsvorrichtung ist konstruktiv sehr aufwendig, denn sie ist entweder als pneumatischer Dämpferzylinder oder als Drehfederdämpfer ausgebildet.

Bei diesen bekannten Klappvorrichtungen bestehen die Hauptteile, d.h. insbesondere das Lagerteil (dort "Aufnahmeplatte" genannt) und das schwenkbare Kopfstützen-Halteteil ("Lagerkörper"), wegen der z.B. bei einem Unfall durch Aufschlagen eines Kopfes auftretenden bzw. zu erwartenden, zum Teil recht hohen Stoßkraftbelastungen hauptsächlich aus Metall (Alu-Druckguß). Dadurch ist die Klappvorrichtung aber einerseits relativ schwergewichtig sowie andererseits auch recht teuer in der Herstellung, zumal in bestimmten Bereichen zusätzliche Kunststoff-Einsatzteile vorgesehen sind, und zwar insbesondere im Schwenklagerbereich und im Aufnahmebereich für die Kopfstützen-Trägerstangen.

Die FR-A-2 401 040 beschreibt eine Kopfstütze, jedoch keine Klappvorrichtung im Sinne der vorliegenden Erfindung. Beschrieben ist nur der obere Teil, d.h. das eigentliche Kopf-Anlageteil, das an Haltestangen befestigt ist. Dieses Kopf-Anlageteil besteht aus einer Polsterung, die von einem Trägerteil gehalten wird, wobei das Trägerteil aus Kunststoff besteht.

Ferner beschreiben auch die Dokumente EP-A-0 450 166, DE-U-90 11 486 und EP-A-0 322 374 jeweils nur den oberen Teil der eigentlichen Kopfstütze, aber keine Klappvorrichtung im hier angesprochenen Sinne.

Der vorliegenden Erfindung liegt die Aufgabe zugrunde, ausgehend von dem beschriebenen Stand der Technik eine Klappvorrichtung zu schaffen, die bei zumindest gleichbleibend guten Gebrauchs- und Sicherheitseigenschaften ein wesentlich geringeres Gewicht aufweist und einen geringeren Herstellungsaufwand erfordert.

Erfindungsgemäß wird dies dadurch erreicht, daß die das Kopfstützen-Halteteil bildenden Aufnahmeteile aus Kunststoff bestehen, wobei jedes Aufnahmeteil in einem Winkelbereich zwischen dem Schwenklagerabschnitt und dem Aufnahmeabschnitt einen Verbindungsabschnitt aufweist, der eine etwa in einer von der Schwenkachse und der Mittelachse der Verriegelungsstange definierten Ebene liegende Mittelwandung sowie sich beidseitig etwa senkrecht von der Mittelwandung erstreckende Versteifungsrippen aufweist. Dies bedeutet, daß nunmehr zumindest eine der beiden Hauptkomponenten der erfindungsgemäßen Klappvorrichtung als Formteil gänzlich bzw. in der Hauptsache aus Kunststoff ausgebildet ist. In bevorzugter Ausgestaltung besteht jedoch auch das Lagerteil aus Kunststoff. Als Material wird insbesondere ein glasfaserverstärktes Polyamid verwendet, vorzugsweise mit einem Faseranteil von 30% (PA6 GF30). Zudem kann es vorteilhaft sein, dem Material einen Elastomeranteil derart zuzusetzen, daß die Teile auch bei niedriger Temperatur eine hohe Schlagzähigkeit und allgemein eine geringe Sprödigkeit aufweisen.

Die Klappvorrichtung besitzt durch die Erfindung ein äußerst geringes Gewicht (Gewichtsreduzierung von 40% gegenüber der bekannten Ausführung), was heute in der Kfz-Industrie stets von Vorteil ist. Zudem können sich gesondert herzustellende und zu montierende Kunststoffteile vorteilhafterweise erübrigen. Bereits dies trägt zu einer Reduzierung der Herstellungskosten bei. Ferner ist es ein wesentlicher Vorteil, daß mit ein und demselben Kunststoff-Formwerkzeug ohne Schwierigkeiten mehrere Millionen Formteile produziert werden können. Im Gegensatz hierzu können im Falle von Aluminium-Gußteilen mit einem Werkzeug maximal 100.000 Stück, mit Überarbeitung bzw. Reparatur des Werkzeuges allenfalls bis zu 180.000 Stück, hergestellt werden, so daß durch die Erfindung auch eine wesentliche Reduzierung der Werkzeugkosten und damit der Gesamt-Herstellungskosten erreicht werden kann.

Durch die Verwendung eines Kunststoffmaterials für eine Kopfstützen-Klappvorrichtung der gattungsgemäßen Art könnte nicht ohne weiteres davon ausgegangen werden, daß aus Kunststoff bestehende Teile den insbesondere bei einem unfallbedingten Aufprall zu erwartenden hohen Kräften und Stoßbelastungen überhaupt standhalten können. Erfindungsgemäß können aber durch den zur Versteifung verrippten Verbindungsabschnitt jedes Aufnahmeteils des Halteteils - sowie auch durch weitere, im folgenden noch genauer zu erläuternde Maßnahmen - auch mit den aus Kunststoff bestehenden Hauptkomponenten eine gute Haltbarkeit und Stabilität und auch ein hohes Maß an Sicherheit für die Fahrzeuginsassen gewährleistet werden.

Vorteilhafte Weiterbildungen und Ausgestaltungsmerkmale der Erfindung ergeben sich aus den weiteren Ansprüchen 2 bis 25 sowie der folgenden Beschreibung eines bevorzugten Ausführungsbeispiels und einiger Ausführungsvarianten der erfindungsgemäßen Klappvorrichtung. Hierbei zeigen:
- Fig. 1: eine Draufsicht einer erfindungsgemäßen Kopfstützen-Klappvorrichtung,
- Fig. 2: eine Ansicht auf die Klappvorrichtung in Pfeilrichtung II gemäß Fig. 1,
- Fig. 3: einen Längsschnitt in der Schnittebene III-III gemäß Fig. 2,
- Fig. 4: eine Ansicht analog zu Fig. 3 einer hierzu alternativen Ausführungsvariante,
- Fig. 5: einen Querschnitt in der Schnittebene V-V gemäß Fig. 1,
- Fig. 6: einen Querschnitt in der Schnittebene VI-VI gemäß Fig. 1,
- Fig. 7: einen Querschnitt in der Schnittebene VII-VII gemäß Fig. 1,
- Fig. 8: einen Querschnitt zur Erläuterung einer Ausführungsvariante zu Fig. 7,
- Fig. 9: einen Querschnitt in der Schnittebene IX-IX gemäß Fig. 1,
- Fig. 10: einen Querschnitt in der Schnittebene X-X gemäß Fig. 1,
- Fig. 11: einen Schnitt längs der Schnittlinie XI-XI in Fig. 9,
- Fig. 12: eine vergrößerte Teilansicht auf ein Einzelteil in Pfeilrichtung XII gemäß Fig. 1,
- Fig. 13: einen Schnitt durch das Einzelteil in der Schnittebene XIII-XIII gemäß Fig. 12 und
- Fig. 14: eine gegenüber Fig. 12 rückwärtige Ansicht des Einzelteils in Pfeilrichtung XIV gemäß Fig. 13.

In den verschiedenen Figuren der Zeichnung sind gleiche Teile stets mit den gleichen Bezugszeichen versehen, so daß jede eventuell nur einmal vorkommende Beschreibung eines bestimmten Teils analog auch bezüglich der anderen Zeichnungsfiguren gilt, in denen dieses Teil mit dem entsprechenden Bezugszeichen ebenfalls zu erkennen ist.

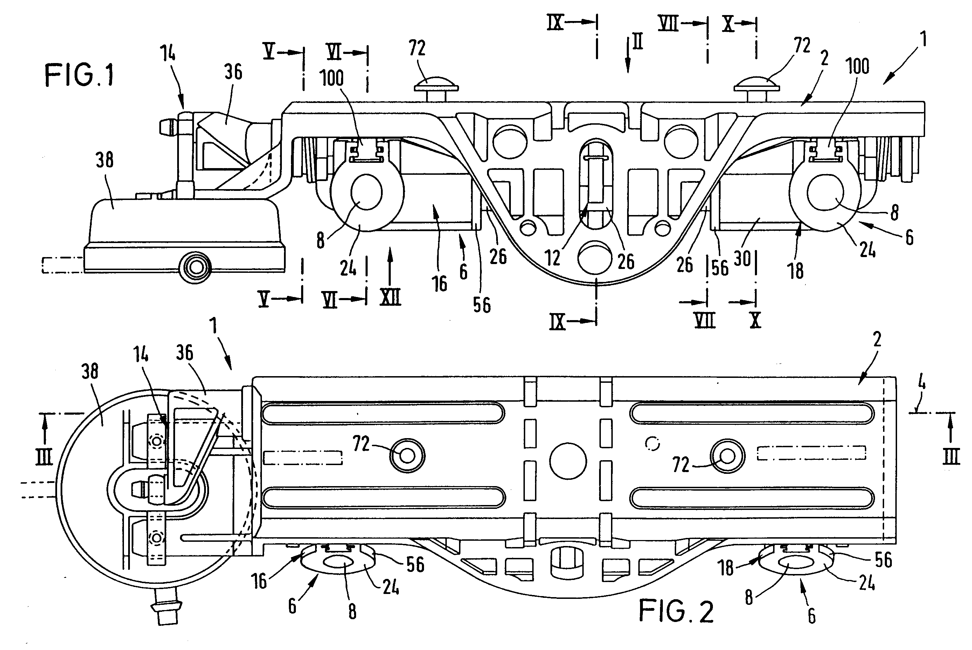

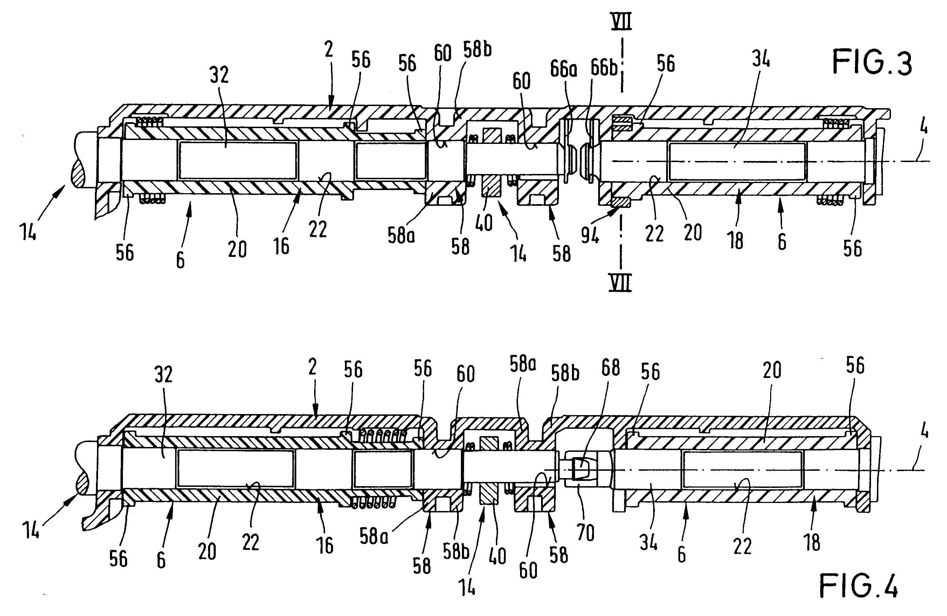

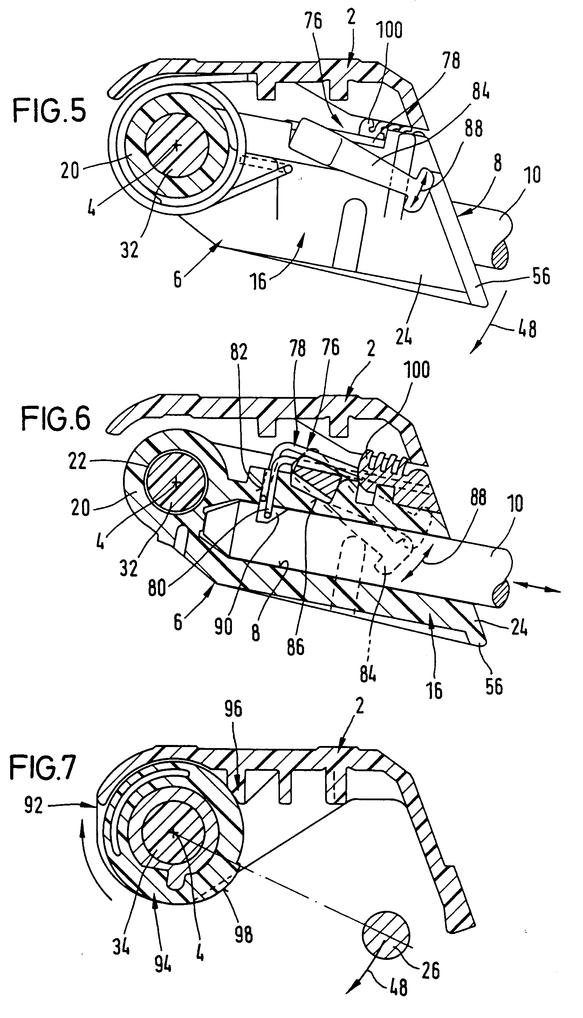

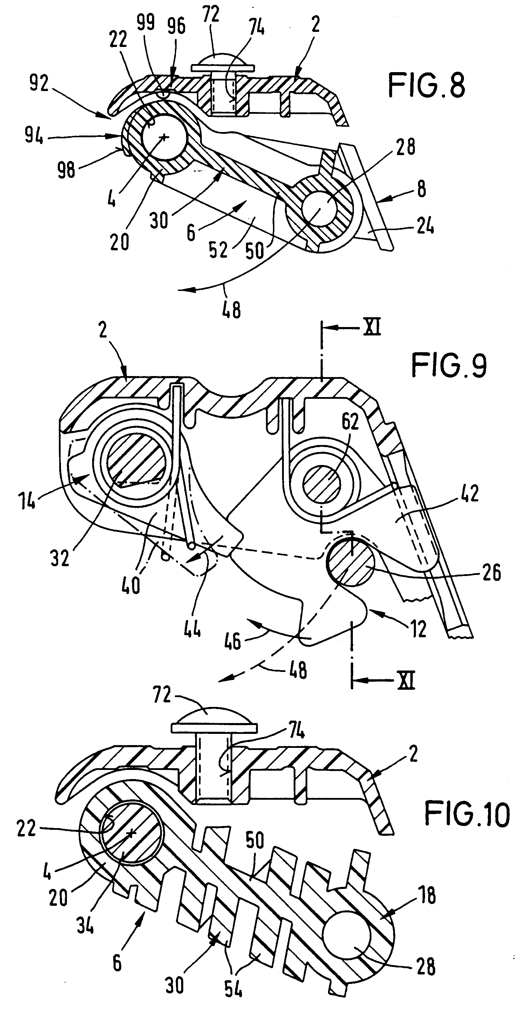

Wie sich zunächst aus Fig. 1 und 2 ergibt, besteht eine erfindungsgemäße Kopfstützen-Klappvorrichtung 1 im wesentlichen aus zwei Hauptkomponenten, und zwar aus einem Lagerteil 2 und einem an diesem um eine Schwenkachse 4 (siehe hierzu auch Fig. 3, 4, 12 und 14) schwenkbar gelagerten Kopfstützen-Halteteil 6. Dieses Halteteil 6 weist zwei zur Schwenkachse 4 senkrechte und zueinander parallele Aufnahmeöffnungen 8 zur arretierbaren Aufnahme von zwei zueinander parallelen Enden von Trägerstangen 10 einer im übrigen nicht dargestellten Kopfstütze auf (siehe hierzu insbesondere Fig. 5 und 6). Das Lagerteil 2 ist als "Aufnahmeplatte" mit zwei zueinander in einem stumpfen Winkel angeordneten Plattenabschnitten ausgebildet, was insbesondere in den Figuren 7 und 9 erkennbar ist.

Das Halteteil 6 ist mit einer Federkraft beaufschlagt, so daß es selbsttätig in eine Rückklappstellung verschwenkbar ist, in der die am Halteteil 6 befestigte Kopfstütze in einer Aufnahmemulde einer Hutablage versenkt angeordnet ist (sog. Nichtgebrauchsstellung). Mittels der Kopfstütze kann dann das Halteteil 6 aus der Rückklappstellung gegen die Federkraft in eine Hochklappstellung (Gebrauchsstellung der Kopfstütze) verschwenkt werden, wobei das Halteteil 6 in der Hochklappstellung insbesondere über ein Fallenschloß 12 (siehe insbesondere Fig. 9) verriegelt ist. Zur Freigabe der federkraftbedingten Schwenkbewegung in die Rückklappstellung ist das Fallenschloß 12 über einen Lösemechanismus 14 entriegelbar. Es ist zu bemerken, daß in der Zeichnung jeweils die verriegelte Hochklappstellung des Halteteils 6 dargestellt ist, wobei die nicht dargestellte Kopfstütze aufgrund eines bogenförmigen Verlaufes ihrer Trägerstangen 10 in ihrer Gebrauchsstellung steht.

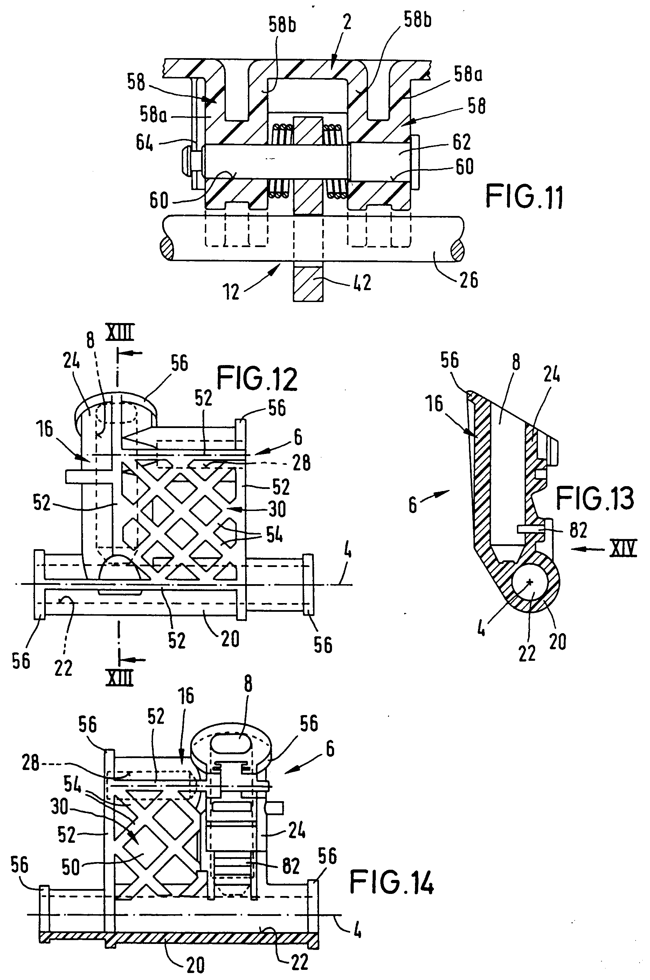

Das Kopfstützen-Halteteil 6 besteht vorzugsweise aus zwei Einzelteilen, und zwar aus zwei in Richtung der gemeinsamen Schwenkachse 4 voneinander beabstandeten, im wesentlichen spiegelsymmetrisch ausgebildeten Aufnahmeteilen 16, 18. Wie am Beispiel des Aufnahmeteils 16 in den Fig. 12 bis 14 veranschaulicht ist, besteht jedes Aufnahmeteil aus einem Schwenklagerabschnitt 20 mit einer zur Schwenkachse 4 koaxialen, durchgehenden Lageröffnung 22 sowie aus einem Aufnahmeabschnitt 24, der eine der bereits erwähnten Aufnahmeöffnungen 8 für die Trägerstange 10 aufweist, wobei die Aufnahmeöffnung 8 jeweils zur Schwenkachse 4 bzw. zur Lageröffnung 22 zumindest annähernd senkrecht verläuft. Gemäß Fig. 1 sind die beiden Aufnahmeteile 16, 18 über eine zur Schwenkachse 4 parallele, mit dem Fallenschloß 12 zusammenwirkende Verriegelungsstange 26 verbunden; diese Verriegelungsstange 26 wird somit jeweils zusammen mit den Aufnahmeteilen 16, 18 bzw. dem Halteteil 6 verschwenkt.

Hierbei weist jedes Aufnahmeteil 16, 18 eine Aufnahmeöffnung 28 für ein Ende der Verriegelungsstange 26 auf; somit sitzt die Verriegelungsstange 26 beidendig in jeweils einer Aufnahmeöffnung 28 der beiden Aufnahmeteile 16, 18 und erstreckt sich zwischen den Aufnahmeteilen 16, 18 frei parallel zur Schwenkachse 4. In diesem Bereich wirkt die Verriegelungsstange 26 mit dem Fallenschloß 12 zusammen. Dies wird im folgenden anhand der Fig. 9 noch näher erläutert werden.

Wie sich vor allem aus Fig. 12 und 14 ergibt, weist jedes Aufnahmeteil 16, 18 in seinem jeweils dem anderen Aufnahmeteil 18, 16 zugekehrten Winkelbereich zwischen dem Schwenklagerabschnitt 20 und dem Aufnahmeabschnitt 24 einen die Aufnahmeöffnung 28 für die Verriegelungsstange 26 aufweisenden, insbesondere etwa rechteckigen Verbindungsabschnitt 30 auf. Dieser Verbindungsabschnitt 30 dient zur Versteifung der Anbindung zwischen dem Aufnahmeabschnitt 24 und dem Schwenklagerabschnitt 20 sowie auch zur Versteifung des Übergangs von dem Aufnahmeabschnitt 24 zu der Verriegelungsstange 26.

Gemäß Fig. 3 und 4 sind für die schwenkbare Lagerung des Kopfstützen-Halteteils 6 vorzugsweise zwei sich in Richtung der Schwenkachse 4 erstreckende Schwenkwellen 32, 34 vorgesehen, die sich durch die Lageröffnungen 22 der Aufnahmeteile 16, 18 erstrecken. Dabei ist eine der beiden Schwenkwellen, und zwar die Schwenkwelle 32, als Teil des Lösemechanismus 14 einendig über einen Schwenkhebel 36 - siehe hierzu Fig. 1 und 2 - mit einem insbesondere pneumatischen Betätigungsorgan 38 (sog. Unterdruckdose) sowie anderendig drehmomentschlüssig mit einer zum Verriegeln und Entriegeln mit dem Fallenschloß 12 zusammenwirkenden Sperrklinke 40 verbunden.

Die Verriegelungsfunktion des Fallenschlosses 12 und die Entriegelungsfunktion des Lösemechanismus 14 sollen nun insbesondere anhand der Fig. 9 erläutert werden. Das Fallenschloß 12 besteht im wesentlichen aus einer mit der Verriegelungsstange 26 zusammenwirkenden Gabelfalle 42, die ihrerseits mit der Sperrklinke 40 zusammenwirkt. Gemäß Fig. 9 stützt sich in der dargestellten Hochklappstellung die die Verriegelungsstange 26 arretierende Gabelfalle 42 federkraftbedingt an der Sperrklinke 40 ab. Die Sperrklinke 40 ist über die Schwenkwelle 32 und den Schwenkhebel 36 von dem Betätigungsorgan 38 derart bewegbar,daß die Sperrklinke 40 gegen Federkraft in Pfeilrichtung 44 von der Gabelfalle 42 weg verschwenkt werden kann, wodurch dann die Gabelfalle 42 freigegeben und daher zur Freigabe der Verriegelungsstange 26 ihrerseits federkraftbedingt in Pfeilrichtung 46 verschwenkt wird. Aufgrund der Federkraftbeaufschlagung des Halteteils 6 wird es nach dieser Freigabe der Verriegelungsstange 26 in Pfeilrichtung 48 in die Rückklappstellung verschwenkt. Beim Wiederhochklappen gegen die Federkraft in eine zur Pfeilrichtung 48 entgegengesetzte Richtung wird dann die Verriegelungsstange 26 wieder im Fallenschloß 12 bzw. in der Gabelfalle 42 so verriegelt, wie es in Fig. 9 dargestellt ist.

Die bis hier beschriebene Ausführung der Klappvorrichtung 1 entspricht im wesentlichen den aus dem Stand der Technik bekannten Ausführungsformen.

Erfindungsgemäß bestehen nun das Kopfstützen-Halteteil 6, d.h. die beiden Aufnahmeteile 16, 18, sowie das Lagerteil 2 aus Kunststoff. Besonders geeignet ist ein glasfaserverstärktes Polyamid, insbesondere PA 6 GF 30, vorzugsweise mit einem bestimmten Elastomer-Anteil.

Um hierbei eine zumindest ausreichende Festigkeit und Sicherheit zu gewährleisten, wurden eine Reihe von speziellen Maßnahmen getroffen, die im folgenden näher erläutert werden sollen.

In erster Linie ist hervorzuheben, daß die Verriegelungsstange 26 erfindungsgemäß hinsichtlich ihres Materials und ihrer Abmessungen (Länge, Querschnittsform und -größe),d.h. hinsichtlich ihrer Stabilitäts- und Verformungseigenschaften, sowie in Abhängigkeit von in der Hochklappstellung möglicherweise zu erwartenden, aufprallbedingten Kräften und in Abhängigkeit von den mechanischen Eigenschaften des aus Kunststoff bestehenden Halteteils 6 derart ausgelegt ist,daß die Kräfte hauptsächlich durch Verformung der Verriegelungsstange 26 abgebaut werden und dadurch eine Krafteinleitung in das Halteteil 6 und in das Lagerteil 2 zumindest in einem solchen Maße vermieden wird, daß Beschädigungen im Bereich des Halteteils 6 und auch im Bereich von dessen Lagerung weitgehend ausgeschlossen sind. Hierbei tritt die zusätzliche vorteilhafte Wirkung auf, daß durch die erfindungsgemäße Auslegung der Verriegelungsstange 26 auch ein sanftes, gesteuertes bzw. steuerbares Abbremsen eines auf die Kopfstütze aufschlagenden Kopfes eines Fahrzeuginsassen erreicht werden kann. Im Zusammenhang mit der gewünschten Verformbarkeit der Verriegelungsstange 26 ist es vorteilhaft, wenn die Verriegelungsstange 26 mit mindestens einem ihrer Stangenenden mit Schiebesitz in der zugehörigen Aufnahmeöffnung 28 sitzt. Bei einer Verbiegung der Verriegelungsstange 26 wird hierdurch das jeweilige Ende aus der Aufnahmeöffnung 28 herausgezogen, ohne daß es hierbei zu einer nennenswerten Beschädigung des Halteteils 6 bzw. des jeweiligen Aufnahmeteils 16, 18 kommt.

Für das erfindungsgemäß aus Kunststoff bestehende Kopfstützen-Halteteil 6 bzw. seine beiden Aufnahmeteile 16, 18 ist es ferner vorteilhaft, wenn - siehe hierzu insbesondere die Fig. 10, 12 und 14 - der Verbindungsabschnitt 30 jedes Aufnahmeteils 16,18 eine etwa in einer von der Schwenkachse 4 und der Mittelachse der Verriegerungsstange 26 definierten Ebene liegende Mittelwandung 50 sowie sich auf beiden Flächen etwa senkrecht von der Mittelwandung 50 weg erstreckende Versteifungsrippen 52, 54 aufweist. Auf diese Weise kann eine hohe Steifigkeit bei geringem Materialaufwand erreicht werden. Vorteilhaft ist es zudem, wenn ein Teil der Versteifungsrippen, und zwar im dargestellten Beispiel die Versteifungsrippen 52, zusammen ein vorzugsweise etwa auf der rechteckigen Grundform des Verbindungsabschnittes 30 liegendes Rechteck bildend parallel bzw. senkrecht zur Schwenkachse 4 verlaufen. Die weiteren Versteifungsrippen 54 verlaufen dann vorzugsweise innerhalb dieses Rechteckes sich kreuzend schräg, insbesondere jeweils in einem Winkel von etwa 40° bis 50° zu den das Rechteck bildenden Versteifungsrippen 52. Es ergibt sich somit eine Art "Waffelmuster", was zu einer außerordentlich guten Kraftverteilung der von der Kopfstütze über die Trägerstange 10 in den Aufnahmeabschnitt 24 eingeleiteten Kräfte, indem diese Kräfte über die gesamte in Richtung der Schwenkachse 4 gemessene Länge des Verbindungsabschnittes 30 verteilt und weiter in den Schwenklagerabschnitt 20 eingeleitet werden.

Zur weiteren Versteifung der Kunststoff-Aufnahmeteile 16,18 ist es ferner vorteilhaft, wenn im Mündungsbereich vorzugsweise jeder der vorhandenen Öffnungen (Aufnahmeöffnung 8 für die Kopfstützen-Trägerstange 10, beide Mündungsbereiche der Lageröffnung 22, Aufnahmeöffnung 28 für die Verriegelungsstange 26) ein äußerer, zumindest bereichsweise ringbundartig umlaufender Versteifungssteg 56 gebildet ist. Auch dies ist vor allem in den Fig. 12 bis 14 zu erkennen.

Als weitere "kunststoffspezifische" Maßnahme wurde erfindungsgemäß der Abstand der Verriegelungsstange 26 von der Schwenkachse 4 gegenüber der bekannten, gattungsgemäßen Klappvorrichtung verkleinert, und zwar in einer konkreten, realisierten Ausführung auf ein Maß von etwa 40 mm (bisher etwa 42-43 mm). Ferner ist es vorteilhaft, auch den Abstand zwischen der Verriegelungsstange 26 und der Drehachse der Gabelfalle 42 (Fallenachse 62) entsprechend zu reduzieren; in der verriegelten Hochklappstellung (vgl. Fig. 9) beträgt er insbesondere etwa 15 mm. Somit ist die Verriegelungsstange 26 mehr "in die Klappvorrichtung hinein" verlegt worden. Hierdurch kann der Verbindungsabschnitt 30 jedes Aufnahmeteils 16,18 - in einer zur Mittelwandung 50 senkrechten Richtung gesehen - "dicker" und damit stabiler ausgebildet werden. Es sei bemerkt, daß allein eine "dickere" Ausbildung des Verbindungsabschnittes 30 ohne die erfindungsgemäße Verlegung der Verriegelungsstange 26 aufgrund von beengten Raumverhältnissen im Kfz-Einbaubereich nicht möglich gewesen wäre. Die Verlegung der Verriegelungsstange 26 führt zudem auch zu einer insgesamt günstigeren Kinematik der erfindungsgemäßen Klappvorrichtung 1.

Auch das Lagerteil 2 weist spezielle, bezüglich der Formung aus Kunststoff vorteilhafte Merkmale auf. Wie sich insbesondere aus Fig. 3, 4 und 11 ergibt, weist das Lagerteil 2 zur Lagerung des Fallenschlosses 12 und des Lösemechanismus 14 zwei etwa senkrecht zur Schwenkachse 4 angeordnete, in zueinander etwa paralleler Anordnung voneinander beabstandete Lagerstege 58 auf, wobei vorteilhafterweise jeder Lagersteg 58 aus zwei parallelen Einzelstegen 58a, 58b besteht, die im Bereich von Lageröffnungen 60 sowie vorzugsweise über zusätzliche Querstege (in der Zeichnung nicht erkennbar) miteinander verbunden, d.h. einstückig geformt sind. Hierdurch ist eine hohe Stabilität der Lagerstege 58 gewährleistet. Außerdem ergibt sich hierdurch vorteilhafterweise eine axiale Verlängerung jeder Lageröffnung 60 (siehe insbesondere Fig. 11), wodurch eine sehr gute Kraftverteilung im Lagerbereich erreicht wird.

Gemäß Fig. 11 ist die Gabelfalle 42 des Fallenschlosses 12 über eine insbesondere aus Metall bestehende Fallenachse 62 schwenkbar gelagert, wobei sich die Fallenachse 62 durch die entsprechenden Lageröffnungen 60 der Lagerstege 58 erstreckt sowie zweckmäßigerweise selbstsichernd gehalten ist. Dies wird gemäß Fig. 11 vorzugsweise dadurch erreicht, daß die Fallenachse 62 mit einem elastischen Rastansatz 64 des Lagerteils 2 lösbar verrastet ist. Hierdurch erübrigen sich vorteilhafterweise zusätzliche Sicherungselemente, wie beispielsweise federnde Sicherungsscheiben oder dergleichen.

Gemäß Fig. 3 und 4 erstreckt sich auch die Schwenkwelle 32 durch Lageröffnungen 60 der Lagerstege 58, wobei die Schwenkwelle 32 im zwischen den Lagerstegen 58 liegenden Bereich drehmomentschlüssig die Sperrklinke 40 trägt. Hierzu sitzt die Sperrklinke 40 mit "Preßpassung" in axialer Richtung kraftschlüssig sowie in Schwenkrichtung formschlüssig auf der Schwenkwelle 32. Die Schwenkwelle 32 besitzt vorzugsweise im Sitzbereich der Sperrklinke 40 vor deren Montage ein Übermaß, z.B. durch stegartige Ansätze, die bei der Montage der Sperrklinke 40 verquetscht werden.

Wie sich weiterhin aus den Figuren 3 und 4 ergibt, sind vorzugsweise auch die beiden aus Kunststoff bestehenden Schwenkwellen 32,34 selbstsichernd im Lagerteil 2 gehalten. Hierfür sind zwei Alternativen veranschaulicht. Gemäß Fig. 3 sind die Schwenkwellen 32, 34 für die selbstsichernde Halterung mit jeweils einem Rastelement 66a, 66b des Lagerteils 2 lösbar verrastet. Im Falle der Ausführungsform nach Fig. 4 sind die beiden Schwenkwellen 32, 34 demgegenüber im Bereich ihrer einander zugekehrten Enden miteinander lösbar verrastet. Im dargestellten Ausführungsbeispiel greift die Schwenkwelle 32 mit einem Rastansatz 68 axial in eine Rastaufnahme 70 der anderen Schwenkwelle 34 ein.

Bei der bevorzugten Ausführung der Schwenkwellen 32, 34 aus Kunststoff ist noch folgende vorteilhafte Maßnahme besonders hervorzuheben. Die einen Teil des Lösemechanismus 14 bildende und hierzu einendig mit dem Schwenkhebel 36 und anderendig mit der Sperrklinke 40 verbundene Schwenkwelle 32 verwindet sich bei Beaufschlagung mit einer Betätigungskraft aufgrund ihrer Ausbildung aus Kunststoff naturgemäß stärker als eine beispielsweise aus Metall bestehende Welle. Um diese Torsion auszugleichen, ist nun erfindungsgemäß vorgesehen, daß der Schwenkhebel 36 und die Sperrklinke 40 hinsichtlich ihrer relativen Winkelausrichtung in Abhängigkeit von der betätigungskraftbedingten Torsion der Kunststoff-Schwenkwelle 32 derart angeordnet bzw. ausgerichtet sind, daß bei Beaufschlagung des Schwenkhebels 36 mit einer vorbestimmten, zur Auslösung des Fallenschlosses erforderlichen Betätigungskraft durch das Betätigungsorgan 38 trotz der dabei auftretenden Torsion der Schwenkwelle 32 jedenfalls die Entriegelungsstellung der Sperrklinke 40 erreichbar ist. Dies wird konkret dadurch erreicht, daß die Schwenkwelle 32 über den Schwenkhebel 36 bereits vor einer Betätigung mit einer Vorspannungstorsion beaufschlagt ist; im Vergleich zu der aus dem Stand der Technik bekannten Stahlausführung der Welle handelt es sich um einen Ausrichtungsunterschied des Schwenkhebels 36 von etwa 4° ("4°-Vorspannung"). Ferner wurde die Kinematik vorzugsweise auch dahingehend verbessert, daß das Ende der Sperrklinke 40 (siehe Fig. 9) in Schwenkrichtung (Pfeil 44) nur noch einen Weg von ca. 4 mm (statt bisher 7 mm) zurücklegt, was einer Reduzierung des Schwenkwinkels der Sperrklinke 40 von etwa 7° entspricht.

Aufgrund der erfindungsgemäßen Kunststoffausbildung des Lagerteils 2 können zu dessen Befestigung im Fahrzeug vorteilhafterweise selbstschneidende Montageschrauben 72 (gewindeformende Schrauben für Kunststoff) verwendet werden, die in entsprechende Befestigungslöcher 74 des Lagerteils 2 eingreifen und dort beim Verschrauben selbsttätig ein Gewinde bilden.

Es werden nun einige vorteilhafte Weiterbildungen erläutert, die ohne weiteres auch im Zusammenhang mit bekannten Ausführungsformen der Klappvorrichtung Verwendung finden könnten, d.h. auch mit aus Metall bestehenden Lagerteilen und Halteteilen.

Gemäß Fig. 5 und 6 weist das Kopfstützen-Halteteil 6 eine Arretiereinrichtung 76 zum lösbaren Arretieren der Kopfstützen-Trägerstangen 10 auf. Diese neuartige Arretiereinrichtung 76 ist im Vergleich zum Stand der Technik wesentlich einfacher und damit kostengünstiger. Sie besteht insbesondere aus mindestens einem Federelement 78; vorzugsweise sind jedoch zwei Federelemente 78 vorgesehen, wobei außenseitig an jedem Aufnahmeteil 16,18 eines dieser Federelemente 78 gelagert ist. Jedes Federelement 78 ist vorzugsweise als gebogene Drahtfeder ausgebildet und greift mit einem Arretierabschnitt 80 durch eine Schlitzöffnung 82 des jeweiligen Aufnahmeteils 16, 18 hindurch etwa in radialer Richtung in die Aufnahmeöffnung 8 für die Trägerstange 10 ein. Zwischen einem außen am Aufnahmeteil 16,18 gehalterten, sich etwa parallel zur Trägerstange 10 erstreckenden Abschnitt des Federelementes 78 und dem Aufnahmeteil 16,18 ist vorzugsweise ein Lösehebel 84 derart wippenartig über eine Kippkante 86 kippbar gelagert, daß durch Kippen des Lösehebels 84 (vgl. die in Fig. 5 und 6 eingezeichneten Doppelpfeile 88) das Federelement 78 elastisch von dem Aufnahmeteil 16,18 weg verbiegbar ist, so daß sein Arretierabschnitt 80 zur Freigabe bzw. zum Einführen der Trägerstange 10 aus dem Bereich der Aufnahmeöffnung 8 gelangt. Dabei wirkt der Arretierabschnitt 80 mit einer Rastvertiefung 90 der Trägerstange 10 zusammen. Dies ist in Fig. 6 gut zu erkennen. Vorteilhafterweise sind die Federelemente 78 sowie auch die Lösehebel 84 der beiden Aufnahmeteile 16, 18 jeweils identisch ausgebildet, wobei zudem die Lösehebel 84 vorzugsweise in spiegelsymmetrischer Anordnung an den Aufnahmeteilen 16, 18 montiert sind.

Gemäß einer weiteren vorteilhaften Ausgestaltung, die ebenfalls unabhängig von der erfindungsgemäßen Ausgestaltung des Halteteils 6 und des Lagerteils 2 aus Kunststoff angewandt werden könnte, ist zwischen dem Kopfstützen-Halteteil 6 und dem Lagerteil 2 eine Dämpfereinrichtung 92 derart vorgesehen, daß die federkraftbedingte Rückklappbewegung des Halteteils 6 vor Erreichen der Rückklappstellung selbsttätig abgebremst (gedämpft) wird. Dabei kann es vorteilhaft sein, die Dämpfereinrichtung 92 so auszubilden, daß sie bei der Rückklappbewegung des Halteteils 6 kurz vor Erreichen der Rückklappstellung bereits ihre Dämpfungs- bzw. Bremswirkung verliert. Hierdurch wird erreicht, daß die Kopfstütze jedenfalls ganz bis in ihre Nicht-Gebrauchsstellung gelangt und nicht bereits davor "stehenbleibt".

Wie sich nun vor allem aus den Figuren 7 und 8 ergibt, ist die insbesondere in Verbindung mit der vorliegenden Erfindung vorgesehene Dämpfereinrichtung 92 als Reibungsdämpfer ("Auflaufdämpfer") mit einem sich zusammen mit dem Halteteil 6 um die Schwenkachse 4 bewegenden Exzenterelement 94 und einem mit diesem reibend zusammenwirkenden, stationär an dem Lagerteil 2 vorgesehenen Gegenelement 96 ausgebildet. Das Exzenterelement 94 besitzt eine bezüglich der Schwenkachse 4 exzentrische, bei Rotation in Richtung der Rückklappstellung ansteigende Auflauffläche (Nockenbahn) 98, die während der Rückklappbewegung reibend über das Gegenelement 96 geführt wird. Es wird hierdurch eine stetig ansteigende Reibung und damit eine Dämpfungs- bzw. Bremswirkung erreicht. Durch einen bestimmten Verlauf der Auflauffläche 98 kann diese Wirkung gesteuert werden, wobei auch der beschriebene Wegfall der Dämpfungswirkung kurz vor Erreichen der Rückklappstellung erreicht werden kann.

In einer in Fig. 7 dargestellten, ersten Ausführungsform ist das Exzenterelement 94 als separates, drehmomentschlüssig mit dem Halteteil 6, und zwar gemäß Fig. 3 mit dem Schwenklagerabschnitt 20 des Aufnahmeteils 18, verbundenes Bauteil, d.h. Exzenterscheibe bzw. Exzenterring, ausgebildet. In einer in Fig. 8 veranschaulichten Alternativausführung ist demgegenüber das Exzenterelement 94 einstückig mit dem Halteteil 6 geformt (im Bereich des Schwenklagerabschnittes 20 zumindest eines der beiden Aufnahmeteile 16, 18). Das Gegenelement 96 ist jedoch in beiden Ausführungen vorzugsweise einstückig, gemäß Fig. 8 insbesondere als nockenartiger Ansatz 99, mit dem Lagerteil 2 geformt. Gemäß Fig. 7 wird das Gegenelement 96 von einem Wandungsabschnitt des Lagerteils 2 gebildet, so daß hier eine flächige Anlage zwischen dem Exzenterelement 94 bzw. der Auflauffläche 98 und dem Gegenelement 96 gewährleistet ist.

Diese beschriebene Dämpfereinrichtung 92 ist im Vergleich zum Stand der Technik, wie er sich beispielsweise aus der oben bereits erwähnten DE-PS 36 23 658 ergibt, wesentlich einfacher und preiswerter.

Wie sich nun noch aus Fig. 1, 5 und 6 ergibt, ist vorteilhafterweise an dem Kopfstützen-Halteteil 6, und zwar vorzugsweise an jedem seiner Aufnahmeteile 16, 18, ein elastisches Pufferelement 100 derart befestigt, daß dieses in der verriegelten Hochklappstellung - wie dargestellt - unter Vorspannung zwischen dem Halteteil 6 und dem Lagerteil 2 eingespannt angeordnet ist. Diese Pufferelemente 100 bewirken somit eine praktisch vibrationsfreie Halterung der Kopfstütze. Dabei ist es besonders vorteilhaft, wenn das bzw. jedes Pufferelement 100 gleichzeitig auch zur Halterung des zur Arretierung der Kopfstützen-Trägerstange 10 vorgesehenen Federelementes 78 dient (siehe hierzu insbesondere Fig. 6).

Die Erfindung ist nicht auf die dargestellten und beschriebenen Ausführungsbeispiele beschränkt, sondern umfaßt auch alle im Sinne der Erfindung gleichwirkenden Ausführungen. Ferner ist die Erfindung bislang auch noch nicht auf die in den jeweiligen unabhängigen Ansprüchen definierte Merkmalskombination beschränkt, sondern kann auch durch jede beliebige andere Kombination von bestimmten Merkmalen aller insgesamt offenbarten Einzelmerkmalen definiert sein. Dies bedeutet, daß grundsätzlich praktisch jedes Einzelmerkmal aus jedem unabhängigen Anspruch weggelassen bzw. durch mindestens ein an anderer Stelle der Anmeldung offenbartes Einzelmerkmal ersetzt werden kann. Insofern sind die Ansprüche bislang lediglich als ein erster Formulierungsversuch für eine Erfindung zu verstehen.

## Patentansprüche

1. Klappvorrichtung für eine Kfz-Kopfstütze, mit einem in einem Fahrzeug befestigbaren Lagerteil (2) und einem an dem Lagerteil (2) um eine Schwenkachse (4) schwenkbar gelagerten Kopfstützen-Halteteil (6), wobei das schwenkbar gelagerte Kopfstützen-Halteteil (6) zwei zur Schwenkachse (4) senkrechte und zueinander parallele Aufnahmeöffnungen (8) zur Aufnahme der Enden von zwei Trägerstangen (10) der Kopfstütze aufweist, und wobei das Halteteil (6) zum Zurückklappen der Kopfstütze in eine Nichtgebrauchsstellung durch Federkraft in eine Rückklappstellung sowie zum Hochklappen der Kopfstütze in eine Gebrauchssstellung gegen die Federkraft in eine Hochklappstellung verschwenkbar ist und in der Hochklappstellung über ein Fallenschloß (12) verriegelt sowie zur Freigabe der federkraftbedingten Schwenkbewegung in die Rückklappstellung über einen Lösemechanismus (14) entriegelbar ist, wobei das Halteteil (6) zweiteilig aus zwei Aufnahmeteilen (16, 18) gebildet ist und jedes Aufnahmeteil (16, 18) einen Schwenklagerabschnitt (20) mit einer zur Schwenkachse (4) koaxialen Lageröffnung (22) sowie einen Aufnahmeabschnitt (24) mit einer der Aufnahmeöffnungen (8) für eine der beiden Trägerstangen (10) der Kopfstütze aufweist, und wobei die beiden Aufnahmeteile (16, 18) über eine zur Schwenkachse (4) parallele, mit dem Fallenschloß (12) zusammenwirkende Verriegelungsstange (26) verbunden sind,
**dadurch gekennzeichnet,** daß die das Kopfstützen-Halteteil (6) bildenden Aufnahmeteile (16,18) aus Kunststoff bestehen, wobei jedes Aufnahmeteil (16,18) in einem Winkelbereich zwischen dem Schwenklagerabschnitt (20) und dem Aufnahmeabschnitt (24) einen Verbindungsabschnitt (30) aufweist, der eine etwa in einer von der Schwenkachse (4) und der Mittelachse der Verriegelungsstange (26) definierten Ebene liegende Mittelwandung (50) sowie sich beidseitig etwa senkrecht von der Mittelwandung (50) erstreckende Versteifungsrippen (52, 54) aufweist.

2. Klappvorrichtung nach Anspruch 1,
**dadurch gekennzeichnet,** daß die insbesondere aus Metall bestehende Verriegelungsstange (26) hinsichtlich ihres Materials und ihrer Abmessungen sowie in Abhängigkeit von in der verriegelten Hochklappstellung zu erwartenden, aufprallbedingten Kräften und von den mechanischen Eigenschaften des Kunststoff-Halteteils (6) derart ausgelegt ist, daß die Kräfte hauptsächlich durch Verformung der Verriegelungsstange (26) abgebaut werden und dadurch eine Krafteinleitung in das Halteteil (6) zumindest in einem Beschädigungen im Bereich des Halteteils (6) und dessen Lagerung ausschließenden Maße vermieden wird.

3. Klappvorrichtung nach Anspruch 2,
**dadurch gekennzeichnet,** daß die Verriegelungsstange (26) mit ihren beiden Stangenenden in einander gegenüberliegenden Aufnahmeöffnungen (28) des Halteteils (6) sitzt, wobei zumindest eines der Stangenenden mit Schiebesitz in der zugehörigen Aufnahmeöffnung (28) angeordnet ist.

4. Klappvorrichtung nach Anspruch 3,
**dadurch gekennzeichnet,** daß jedes Aufnahmeteil (16,18) in seinem dem anderen Aufnahmeteil (18,16) zugekehrten Winkelbereich zwischen dem Schwenklagerabschnitt (20) und dem Aufnahmeabschnitt (24) den die Aufnahmeöffnung (28) für die Verriegelungsstange (26) aufweisenden, insbesondere etwa rechteckigen Verbindungsabschnitt (30) aufweist.

5. Klappvorrichtung nach einem der Ansprüche 1 bis 4,
**dadurch gekennzeichnet,** daß einige der Versteifungsrippen (52) zusammen ein Rechteck bildend parallel bzw. senkrecht zur Schwenkachse (4) verlaufen, und daß weitere Versteifungsrippen (54) innerhalb dieses Rechteckes schräg, insbesondere jeweils in einem Winkel von etwa 40° bis 50° zu den das Rechteck bildenden Versteifungsrippen (52), verlaufen.

6. Klappvorrichtung nach einem der Ansprüche 1 bis 5,
**dadurch gekennzeichnet,** daß jedes Aufnahmeteil (16, 18) im Mündungsbereich vorzugsweise jeder der vorhandenen Öffnungen (8,22,28) einen äußeren, zumindest bereichsweise umlaufenden Versteifungssteg (56) aufweist.

7. Klappvorrichtung nach einem der Ansprüche 1 bis 6,
**dadurch gekennzeichnet,** daß das Lagerteil (2) ebenfalls aus Kunststoff besteht.

8. Klappvorrichtung nach einem der Ansprüche 1 bis 7,
**dadurch gekennzeichnet,** daß das Lagerteil (2) zur Lagerung des Fallenschlosses (12) und des Lösemechanismus (14) zwei senkrecht zur Schwenkachse (4) angeordnete Lagerstege (58) aufweist, wobei jeder Lagersteg (58) aus zwei parallelen Einzelstegen (58a,58b) besteht, die im Bereich von Lageröffnungen (60) und vorzugsweise über zusätzliche Querstege miteinander verbunden sind.

9. Klappvorrichtung nach einem der Ansprüche 1 bis 8,
**dadurch gekennzeichnet,** daß das Fallenschloß (12) eine mit der Verriegelungsstange (26) zusammenwirkende und über eine insbesondere aus Metall bestehende Fallenachse (62) gelagerte Gabelfalle (42) aufweist, wobei die Fallenachse (62) selbstsichernd in Lageröffnungen (60) der Lagerstege (58) des Lagerteils (2) sitzt.

10. Klappvorrichtung nach einem der Ansprüche 1 bis 9,
**dadurch gekennzeichnet,** daß das Kopfstützen-Halteteil (6) über zwei aus Kunststoff bestehende Schwenkwellen (32,34) gelagert ist, wobei die Schwenkwellen (32,34) vorzugsweise selbstsichernd gehalten sind.

11. Klappvorrichtung nach Anspruch 10,
**dadurch gekennzeichnet,** daß die Schwenkwellen (32,34) zur selbstsichernden Halterung jeweils mit einem Rastelement (66a,66b) des Lagerteils (2) verrastet sind.

12. Klappvorrichtung nach Anspruch 10,
**dadurch gekennzeichnet,** daß die Schwenkwellen (32,34) zur selbstsichernden Halterung im Bereich ihrer einander zugekehrten Enden miteinander verrastet sind.

13. Klappvorrichtung nach einem der Ansprüche 10 bis 12,
**dadurch gekennzeichnet,** daß eine der beiden Schwenkwellen (32) als Teil des Lösemechanismus (14) einendig über einen Schwenkhebel (36) mit einem insbesondere pneumatischen Betätigungsorgan (38) sowie anderendig drehmomentschlüssig mit einer zum Ver- und Entriegeln mit dem Fallenschloß (12) zusammenwirkenden Sperrklinke (40) verbunden ist, wobei der Schwenkhebel (36) und die Sperrklinke (40) hinsichtlich ihrer Winkelausrichtung in Abhängigkeit von betätigungskraftbedingten Torsionen der aus Kunststoff bestehenden Schwenkwelle (32) derart angeordnet sind, daß bei Beaufschlagung des Schwenkhebels (36) mit einer vorbestimmten Betätigungskraft des Betätigungsorgans (38) trotz auftretender Torsionen der Schwenkwelle (32) die Entriegelungsstellung der Sperrklinke (40) erreichbar ist.

14. Klappvorrichtung nach einem der Ansprüche 7 bis 13,
**dadurch gekennzeichnet,** daß das Kunststoff-Lagerteil (2) Befestigungslöcher (74) für selbstschneidende Montageschrauben (72) aufweist.

15. Klappvorrichtung nach einem der Ansprüche 1 bis 14,
**dadurch gekennzeichnet,** daß das Kopfstützen-Halteteil (6) eine Arretiereinrichtung (76) zum lösbaren Arretieren der Kopfstützen-Trägerstangen (10) aufweist, wobei als Arretiereinrichtung (76) insbesondere mindestens eines der beiden Aufnahmeteile (16,18) ein Federelement (78) aufweist, welches außenseitig an dem Aufnahmeteil (16,18) gelagert ist und mit einem mit einer Rastvertiefung (90) der Trägerstange (10) zusammenwirkenden Arretierabschnitt (80) durch eine Schlitzöffnung (82) des Aufnahmeteils (16,18) hindurch in die Aufnahmeöffnung (8) für die Trägerstange (10) eingreift, wobei außen am Aufnahmeteil (16,18) zwischen diesem und dem Federelement (78) ein Lösehebel (84) derart über eine Kippkante (86) kippbar gelagert ist, daß durch Kippen das Federelement (78) von dem Aufnahmeteil (16,18) weg verbiegbar ist, so daß sein Arretierabschnitt (80) zur Freigabe der Trägerstange (10) aus dem Bereich der Aufnahmeöffnung (8) gelangt.

16. Klappvorrichtung nach Anspruch 15,
**dadurch gekennzeichnet,** daß jedes der beiden Aufnahmeteile (16,18) ein Federelement (78) mit zugehörigem Lösehebel (84) aufweist, wobei die Federelemente (78) und die Lösehebel (84) jeweils identisch ausgebildet und die Lösehebel (84) vorzugsweise in spiegelsymmetrischer Anordnung montiert sind.

17. Klappvorrichtung nach einem der Ansprüche 1 bis 16,
**dadurch gekennzeichnet,** daß zwischen dem Kopfstützen-Halteteil (6) und dem Lagerteil (2) eine Dämpfereinrichtung (92) derart vorgesehen ist, daß die federkraftbedingte Rückklappbewegung des Halteteils (6) vor Erreichen der Rückklappstellung selbsttätig abgebremst wird.

18. Klappvorrichtung nach Anspruch 17,
**dadurch gekennzeichnet,** daß die Dämpfereinrichtung (92) derart konzipiert ist, daß sie bei der Rückklappbewegung des Halteteils (6) kurz vor Erreichen der Rückklappstellung ihre Dämpfungs- bzw. Bremswirkung verliert.

19. Klappvorrichtung nach Anspruch 17 oder 18,
**dadurch gekennzeichnet,** daß die Dämpfereinrichtung (92) als Reibungsdämpfer mit einem sich zusammen mit dem Halteteil (6) um die Schwenkachse (4) bewegenden Exzenterelement (94) und einem mit diesem zusammenwirkenden, an dem Lagerteil (2) vorgesehenen Gegenelement (96) ausgebildet ist.

20. Klappvorrichtung nach Anspruch 19,
**dadurch gekennzeichnet,** daß das Exzenterelement (94) als separates, drehmomentschlüssig mit dem Halteteil (6) verbundenes Bauteil ausgebildet ist.

21. Klappvorrichtung nach Anspruch 19,
**dadurch gekennzeichnet,** daß das Exzenterelement (94) einstückig mit dem Halteteil (6) geformt ist.

22. Klappvorrichtung nach einem der Ansprüche 19 bis 21,
**dadurch gekennzeichnet,** daß das Gegenelement (96) einstückig, insbesondere als nockenartiger Ansatz, mit dem Lagerteil (2) geformt ist.

23. Klappvorrichtung nach einem der Ansprüche 1 bis 22,
**dadurch gekennzeichnet,** daß das Kopfstützen-Halteteil (6) und/oder das Lagerteil (2) sowie vorzugsweise auch die Schwenkwellen (32,34) des Halteteils (6) aus einem hochfesten, vorzugsweise faserverstärkten Kunststoff, insbesondere aus glasfaserverstärktem Poyamid, bestehen.

24. Klappvorrichtung nach einem der Ansprüche 1 bis 23,
**dadurch gekennzeichnet,** daß an dem Kopfstützen-Halteteil (6), vorzugsweise an jedem seiner Aufnahmeteile (16,18), ein elastisches Pufferelement (100) derart befestigt ist, daß dieses in der verriegelten Hochklappstellung unter Vorspannung zwischen dem Halteteil (6) und dem Lagerteil (2) eingespannt angeordnet ist.

25. Klappvorrichtung nach Anspruch 24 und einem der Ansprüche 15 oder 16,
**dadurch gekennzeichnet,** daß das bzw. jedes Pufferelement (100) gleichzeitig auch zur Halterung des zur Arretierung der Kopfstützen-Trägerstange (10) vorgesehenen Federelementes (78) dient.

## Claims

1. Swing-action means for a motor-vehicle headrest, having a bearing part (2), which can be fastened in a vehicle, and a headrest-retaining part (6), which is mounted on the bearing part (2) such that it can be pivoted about a pivot axis (4), it being the case that the pivotably mounted headrest-retaining part (6) has two receiving openings (8) which are perpendicular with respect to the pivot axis (4), are parallel to one another and are intended for receiving the ends of two carrier rods (10) of the headrest, and it being the case that the retaining part (6) can be pivoted into a swung-back position by spring force, for the purpose of swinging the headrest back into a not-in-use position, and into a swung-up position counter to the spring force, for the purpose of swinging the headrest up into a use position, and is locked in the swung-up position via a catch lock (12) and can be unlocked via a release mechanism (14) in order to free the spring-force-induced pivot movement into the swung-back position, it being the case that the retaining part (6) is formed in two parts from two receiving parts (16, 18) and each receiving part (16, 18) has a pivot-bearing section (20), with a bearing opening (22) which is coaxial with the pivot axis (4), and a receiving section (24), with one of the receiving openings (8) for one of the two carrier rods (10) of the headrest, and it being the case that the two receiving parts (16, 18) are connected via a locking rod (26) which is parallel to the pivot axis (4) and interacts with the catch lock (12), characterized in that the receiving parts (16, 18), which form the headrest-retaining part (6), consist of plastic, it being the case that each receiving part (16, 18), in an angle region between the pivot-bearing section (20) and the receiving section (24), has a connecting section (30) which has a central wall (50), located approximately in a plane which is defined by the pivot axis (4) and the centre axis of the locking rod (26), as well as stiffening ribs (52, 54) which extend approximately perpendicularly from the central wall (50) on both sides.

2. Swing-action means according to Claim 1, characterized in that the locking rod (26), which consists in particular of metal, is designed in terms of its material and its dimensions and in dependence on impact-related forces which are to be expected in the locked, swung-up position and on the mechanical properties of the plastic retaining part (6), such that the forces are dissipated predominantly by deformation of the locking rod (26), and this avoids forces being introduced into the retaining part (6) at least to an extent which rules out damage in the region of the retaining part (6) and the mounting of the latter.

3. Swing-action means according to Claim 2, characterized in that the locking rod (26) is positioned, by way of its two rod ends, in mutually opposite receiving openings (28) of the retaining part (6), at least one of the rod ends being arranged with a sliding fit in the associated receiving opening (28).

4. Swing-action means according to Claim 3, characterized in that each receiving part (16, 18), in its angle region between the pivot-bearing section (20) and the receiving section (24), said angle region being directed towards the other receiving part (18, 16), have the in particular approximately rectangular connecting section (30), which contains the receiving opening (28) for the locking rod (26).

5. Swing-action means according to one of Claims 1 to 4, characterized in that some of the stiffening ribs (52) run parallel and perpendicularly with respect to the pivot axis (4), together forming a rectangle in the process, and in that, within this rectangle, other stiffening ribs (54) run obliquely, in particular at an angle of approximately 40° to 50° in each case, with respect to the rectangle-forming stiffening ribs (52).

6. Swing-action means according to one of Claims 1 to 5, characterized in that, in the mouth region preferably of each of the openings (8, 22, 28) provided, each receiving part (16, 18) has an outer stiffening web (56) which runs at least part of the way around these openings.

7. Swing-action means according to one of Claims 1 to 6, characterized in that the bearing part (2) likewise consists of plastic.

8. Swing-action means according to one of Claims 1 to 7, characterized in that, for the purpose of mounting the catch lock (12) and the release mechanism (14), the bearing part (2) has two bearing webs (58) arranged perpendicularly with respect to the pivot axis (4), each bearing web (58) comprising two individual, parallel webs (58a, 58b) which are connected to one another in the region of bearing openings (60), preferably via additional transverse webs.

9. Swing-action means according to one of Claims 1 to 8, characterized in that the catch lock (12) has a fork-like catch (42) which interacts with the locking rod (26) and is mounted via a catch pin (62) consisting in particular of metal, the catch pin (62) being positioned in a self-securing manner in bearing openings (60) of the bearing webs (58) of the bearing part (2).

10. Swing-action means according to one of Claims 1 to 9, characterized in that the headrest-retaining part (6) is mounted via two pivot shafts (32, 34) consisting of plastic, the pivot shafts (32, 34) preferably being retained in a self-securing manner.

11. Swing-action means according to Claim 10, characterized in that, for retaining in a self-securing manner, the pivot shafts (32, 34) are each latched with a latching element (66a, 66b) of the bearing part (2).

12. Swing-action means according to Claim 10, characterized in that, for retaining in a self-securing manner, the pivot shafts (32, 34) are latched with one another in the region of their mutually facing ends.

13. Swing-action means according to one of Claims 10 to 12, characterized in that one of the two pivot shafts (32), as part of the release mechanism (14), is connected at one end, via a pivot lever (36), to an, in particular, pneumatic actuating element (38) and at the other end, so as to be locked with respect to torques, to a ratchet (40) which interacts with the catch lock (12) for locking and unlocking purposes, it being the case that the pivot lever (36) and the ratchet (40) are arranged in terms of their angular alignment, in dependence on actuating-force-induced torsion of the plastic pivot shaft (32), such that, when the pivot lever (36) is subjected to a predetermined actuating force of the actuating element (38), it is possible to reach the unlocking position of the ratchet (40) despite the torsion of the pivot shaft (32) which occurs.

14. Swing-action means according to one of Claims 7 to 13, characterized in that the plastic bearing part (2) has fastening holes (74) for self-tapping fitting screws (72).

15. Swing-action means according to one of Claims 1 to 14, characterized in that the headrest-retaining part (6) has an arresting device (76) for arresting the headrest-carrier rods (10) in a releasable manner, in particular at least one of the two receiving parts (16, 18) having, as arresting device (76), a spring element (78) which is mounted on the outside of the receiving part (16, 18) and, by way of an arresting section (80) which interacts with a latching depression (90) of the carrier rod (10), engages, through a slit opening (82) of the receiving part (16, 18), in the receiving opening (8) for the carrier rod (10), a release lever (84) being mounted tiltably, via a tilting edge (86), on the outside of the receiving part (16, 18), between the latter and the spring element (78), such that tilting causes the spring element (78) to be bent away from the receiving part (16, 18), with the result that the arresting section (80) of said spring element passes out of the region of the receiving opening (8) for the purpose of freeing the carrier rod (10).

16. Swing-action means according to Claim 15, characterized in that each of the two receiving parts (16, 18) has a spring element (78) with associated release lever (84), the spring elements (78) and the release levers (84) being of identical design in each case, and the release levers (84) preferably being fitted in a mirror-symmetrical arrangement.

17. Swing-action means according to one of Claims 1 to 16, characterized in that a damper device (92) is provided between the headrest-retaining part (6) and the bearing part (2) such that the spring-force-induced swing-back movement of the retaining part (6) is automatically slowed down before the swung-back position has been reached.

18. Swing-action means according to Claim 17, characterized in that the damper device (92) is designed such that, during the swing-back movement of the retaining part (6), it loses its damping or slowing-down action shortly before the swung-back position has been reached.

19. Swing-action means according to Claim 17 or 18, characterized in that the damper device (92) is designed as a frictional damper with an eccentric element (94), which moves about the pivot axis (4) together with the retaining part (6), and a mating element (96), which interacts with said eccentric element and is provided on the bearing part (2).

20. Swing-action means according to Claim 19, characterized in that the eccentric element (94) is designed as a separate component which is connected to the retaining part (6) so as to be locked with respect to torques.

21. Swing-action means according to Claim 19, characterized in that the eccentric element (94) is formed integrally with the retaining part (6).

22. Swing-action means according to one of Claims 19 to 21, characterized in that the mating element (96) is formed integrally, in particular as a protrusion-like extension, with the bearing part (2).

23. Swing-action means according to one of Claims 1 to 22, characterized in that the headrest-retaining part (6) and/or the bearing part (2) and preferably also the pivot shafts (32, 34) of the retaining part (6) consist of a high-strength, preferably fibre-reinforced plastic, in particular of glass-fibre-reinforced polyamide.

24. Swing-action means according to one of Claims 1 to 23, characterized in that an elastic buffer element (100) is fastened on the headrest-retaining part (6), preferably on each of the receiving parts (16, 18) of the latter, such that, in the locked, swung-up position, said buffer element is clamped in, under prestressing, between the retaining part (6) and the bearing part (2).

25. Swing-action means according to Claim 24 and either of Claims 15 and 16, characterized in that the buffer element (100), or each buffer element (100), also serves at the same time for retaining the spring element (78), which is provided for arresting the headrest-carrier rod (10).

## Revendications

1. Dispositif rabattable pour un appui-tête d'automobile avec une pièce d'appui (2) pouvant être fixée dans un véhicule, et une pièce de retenue (6) pour l'appui-tête logée sur une pièce d'appui (2) de façon à pouvoir pivoter autour d'un axe de pivotement (4), la pièce de retenue (6) pour l'appui-tête, montée pivotante, présentant deux ouvertures de logement (8) parallèles entre elles et perpendiculaires à l'axe de pivotement (4) pour loger les extrémités de deux tiges de support (10) de l'appui-tête, la pièce de retenue (6) pouvant être basculée par la force d'un ressort dans une position rabattue pour rabattre l'appui-tête dans une position de non-utilisation, et dans une position relevée à l'encontre de la force d'un ressort, pour relever l'appui-tête dans une position d'utilisation, la pièce (6) pouvant être verrouillée dans la position relevée par une serrure à loquet (12), et déverrouillée par un mécanisme de déclenchement (14) pour autoriser le mouvement de pivotement dû à la force du ressort vers la position rabattue, la pièce de retenue (6) étant constituée en deux parties, par deux parties de logement (16, 18), chaque partie de logement (16, 18) comportant un tronçon d'appui pivotant (20) avec une ouverture d'appui (22) coaxiale à l'axe de pivotement (4), ainsi qu'un tronçon de logement (24) comportant l'une des ouvertures de logement (8) pour l'une des deux tiges de support (10) de l'appui-tête, les deux parties de logement (16, 18) étant reliées par une barre de verrouillage (26) parallèle à l'axe de pivotement (4), et coopérant avec la serrure à loquet (12),
caractérisé en ce que les parties de logement (16, 18) qui constituent la pièce de retenue (6) pour l'appui-tête sont réalisées en plastique, chaque pièce de logement (16, 18) comportant, dans une plage angulaire entre le tronçon d'appui pivotant (20) et le tronçon de logement (24), un tronçon de liaison (30) qui présente une paroi centrale (50) située sensiblement dans un plan défini par l'axe de pivotement (4) et l'axe central de la barre de verrouillage (26), ainsi que des nervures de renforcement (52, 54) s'étendant des deux côtés sensiblement dans la direction perpendiculaire dépuis la paroi centrale (50).

2. Dispositif rabattable selon la revendication 1,
caractérisé en ce que la tige de verrouillage (26), notamment en métal, est conçue en ce qui concerne son matériau et ses dimensions ainsi qu'en fonction des forces à escompter dans la position relevée et verrouillée, dues à l'impact, et des propriétés mécaniques de la pièce de retenue en plastique (6) de telle manière que les forces soient réduites principalement par la déformation de la tige de verrouillage (26) et qu'on évite ainsi une application de force dans la pièce de retenue (6) tout du moins dans une proportion qui exclut des détériorations dans la zone de la pièce de retenue (6) et de sa fixation.

3. Dispositif rabattable selon la revendication 2,
caractérisé en ce que la tige de verrouillage (26) est logée avec ses deux extrémités de tige dans des ouvertures de logement (28) se faisant face de la pièce de fixation (6), une au moins des extrémités de la tige étant disposée avec ajustement serré dans l'ouverture de logement (28) spécifique.

4. Dispositif rabattable selon la revendication 3,
caractérisé en ce que chaque partie de logement (16, 18) présente un tronçon de liaison (30) présentant l'ouverture de logement (28) pour la tige de verrouillage (26) et notamment à peu près rectangulaire, dans sa plage angulaire tournée vers l'autre partie de logement (18, 16) entre le tronçon d'appui de pivotement (20) et le tronçon de logement (24).

5. Dispositif rabattable selon l'une des revendications 1 à 4,
caractérisé en ce que certaines des nervures de renforcement (52) forment ensemble un rectangle et sont parallèles ou perpendiculaires à l'axe de pivotement (4), et en ce que d'autres nervures de renforcement (54) s'etendent obliquement à l'intérieur de ce rectangle, notamment respectivement avec un angle d'environ 40° à 50° par rapport aux nervures de renforcement (52) formant le rectangle.

6. Dispositif rabattable selon l'une des revendications 1 à 5,
caractérisé en ce que chaque partie de logement (16, 18) présente une barre de renforcement (56) extérieure, périphérique tout du moins en partie, dans la zone d'ouverture de préférence de chacun des orifices (8, 22, 28) existants.

7. Dispositif rabattable selon l'une des revendications 1 à 6,
caractérisé en ce que la pièce d'appui (2) est également réalisée en plastique.

8. Dispositif rabattable selon l'une des revendications 1 à 7,
caractérisé en ce que la pièce d'appui (2) présente deux barres d'appui (58) perpendiculaires à l'axe de pivotement (4) pour la fixation de la serrure à loquet (12) et du mécanisme de déclenchement (14), chaque barre d'appui (58) comprenant deux barres individuelles (58a, 58b) parallèles qui sont reliées entre elles dans la zone d'ouvertures de logement (60) et de préférence par des barres supplémentaires.

9. Dispositif rabattable selon l'une des revendications 1 à 8
caractérisé en ce que la serrure à loquet (12) présente un loquet en forme de fourche (42) qui agit de concert avec la tige de verrouillage (26) et est logée au moyen d'un axe de loquet (62) notamment en métal, l'axe de loquet (62) étant logé de façon autobloquante dans des ouvertures d'appui (60) des barres d'appui (58) de la pièce d'appui (2).

10. Dispositif rabattable selon l'une des revendications 1 à 9,
caractérisé en ce que la pièce de retenue (6) de l'appui-tête est logée au moyen de deux arbres de pivotement (32, 34) en plastique, les arbres de pivotement (32, 34) étant maintenus de préférence de façon autobloquante.

11. Dispositif rabattable selon la revendication 10,
caractérisé en ce que les arbres de pivotement (32, 34) pour la fixation autobloquante sont enclenchés respectivement avec un élément d'encliquetage (66a, 66b) de la pièce d'appui (2).

12. Dispositif rabattable selon la revendication 10,
caractérisé en ce que les arbres de pivotement (32, 34) pour la fixation autobloquante sont enclenchés l'un avec l'autre dans la zone de leurs extrémités tournées l'une vers l'autre.

13. Dispositif rabattable selon l'une des revendications 10 à 12,
caractérisé en ce que l'un des deux arbres de pivotement (32) en tant que partie du mécanisme de déclenchement (14) est relié d'un côté par un levier de pivotement (36) à un organe de commande (38) notamment pneumatique et de l'autre côté au moyen d'un couple dynamométrique à un cliquet d'arrêt (40) agissant conjointement avec la serrure à loquet (12) pour le verrouillage et le déverrouillage, le levier de pivotement (36) et le cliquet d'arrêt (40) étant disposés en ce qui concerne leur orientation angulaire en fonction de torsions dues à la force du commande de l'arbre de pivotement (32) en plastique de telle manière que la position de déverrouillage du cliquet d'arrêt (40) puisse être atteinte lors de la sollicitation du levier de pivotement (36) avec une force de commande prédéfinie de l'organe de manoeuvre (38) malgré des torsions survenant de l'arbre de pivotement (32).

14. Dispositif rabattable selon l'une des revendications 7 à 13,
caractérisé en ce que la pièce d'appui en plastique (2) présente des trous de fixation (74) pour des vis de montage (72) autotaraudeuses.

15. Dispositif rabattable selon l'une des revendications 1 à 14,
caractérisé en ce que la pièce de retenue (6) de l'appui-tête présente un dispositif d'arrêt (76) pour le verrouillage débrayable des tiges de support (10) de l'appui-tête, notamment l'une au moins des deux pièces de logement (16, 18) présentant comme dispositif d'arrêt (76) un ressort (78) qui est logé à l'extérieur sur la partie de logement (16, 18) dont un tronçon d'arrêt (80) agissant de concert avec une cavité à crans (90) de la tige de support (10), pénètre en traversant une ouverture fendue (82) de la pièce de logement (16, 18), dans l'ouverture de logement (8) pour la tige de support (10), un levier de déclenchement (84) étant logé à l'extérieur sur la pièce de logement (16, 18) entre celle-ci et le ressort (78) de façon à pouvoir basculer au moyen d'une arrête de basculement (86), et que le ressort (78) puisse être plié par basculement en s'éloignant de la pièce de logement (16, 18) de telle manière que son tronçon d'arrêt (80) sorte de la zone de l'ouverture de logement (8) pour libérer la tige de support (10).

16. Dispositif rabattable selon la revendication 15,
caractérisé en ce que chacune des deux parties de logement (16, 18) présente un ressort (78) avec un levier de déclenchement (84) spécifique, les ressorts (78) et les leviers de déclenchement (84) étant réalisés de façon respectivement identique et les leviers de déclenchement (84) étant montés de préférence dans une disposition symétrique.

17. Dispositif rabattable selon l'une des revendications 1 à 16,
caractérisé en ce qu'un système amortisseur (92) est prévu entre la pièce de retenue de l'appui-tête (6) et la pièce d'appui (2) de telle manière que le mouvement de rabattement, dû à la force du ressort, de la pièce de retenue (6) soit freiné automatiquement avant d'atteindre la position rabattue.

18. Dispositif rabattable selon la revendication 17,
caractérisé en ce que le système amortisseur (92) est conçu de telle manière qu'il perde son effet d'amortissement et de freinage lors du mouvement de rabattement de la pièce de retenue (6) juste avant d'atteindre la position rabattue.

19. Dispositif rabattable selon la revendication 17 ou 18,
caractérisé en ce que le système amortisseur (92) est réalisé comme un amortisseur de friction avec un élément d'excentrique (94) se déplaçant conjointement avec la pièce de retenue (6) autour de l'axe de pivotement (4) et un contre élément (96) agissant de concert avec le premier élément et prévu sur la pièce d'appui (2).

20. Dispositif rabattable selon la revendication 19,
caractérisé en ce que l'élément d'excentrique (94) est conçu comme un élément de construction séparé et relié à la pièce de retenue (6) par un couple dynamométrique.

21. Dispositif rabattable selon la revendication 19,
caractérisé en ce que l'élément d'excentrique (94) est formé d'un seul bloc avec la pièce de retenue (6).

22. Dispositif rabattable selon l'une des revendications 19 à 21,
caractérisé en ce que le contre élément (96) est formé d'un seul bloc, notamment comme un taquet du type came, avec la pièce d'appui (2).

23. Dispositif rabattable selon l'une des revendications 1 à 22,
caractérisé en ce que la pièce de retenue (6) de l'appui-tête et la pièce d'appui (2) et de préférence également les arbres de pivotement (32, 34) de la pièce de retenue (6) sont réalisés dans un plastique très résistant, de préférence renforcé de fibres, notamment en polyamide renforcé de fibres de verre.

24. Dispositif rabattable selon l'une des revendications 1 à 23,
caractérisé en ce qu'un élément tampon (100) élastique est fixé sur la pièce de retenue (6) de l'appui-tête, de préférence sur chacune de ses pièces de logement (16, 18) de telle manière que cet élément soit serré dans la position élevée verrouillée sous précontrainte entre la pièce de fixation (6) et la pièce d'appui (2).

25. Dispositif rabattable selon la revendication 24 et l'une des revendications 15 ou 16,
caractérisé en ce que le ou chaque élément tampon (100) sert en même temps également à la fixation du ressort (78) prévu pour le verrouillage de la tige de support (10) de l'appui-tête.
